(19) **Europäisches Patentamt / European Patent Office / Office européen des brevets**

(11) **EP 4 161 134 B1**

(12) # EUROPEAN PATENT SPECIFICATION

(45) Date of publication and mention
of the grant of the patent:
**25.09.2024 Bulletin 2024/39**

(21) Application number: **20948538.2**

(22) Date of filing: **03.08.2020**

(51) International Patent Classification (IPC):
*H04W 36/00* (2009.01)   *H04W 52/02* (2009.01)
*H04W 64/00* (2009.01)   *H04B 17/327* (2015.01)
*H04W 36/32* (2009.01)

(52) Cooperative Patent Classification (CPC):
**H04W 64/006; H04W 36/0085; H04W 52/0229;**
H04B 17/327; H04W 36/324; Y02D 30/70

(86) International application number:
**PCT/CN2020/106665**

(87) International publication number:
**WO 2022/027202 (10.02.2022 Gazette 2022/06)**

---

(54) **CELL MEASUREMENT INDICATION METHOD, TERMINAL DEVICE, AND NETWORK DEVICE**

ZELLENMESSUNGSANZEIGEVERFAHREN, ENDGERÄTEVORRICHTUNG UND
NETZWERKVORRICHTUNG

PROCÉDÉ D'INDICATION DE MESURE DE CELLULE, DISPOSITIF TERMINAL ET DISPOSITIF DE
RÉSEAU

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2023 Bulletin 2023/14**

(73) Proprietor: **GUANGDONG OPPO MOBILE
TELECOMMUNICATIONS
CORP., LTD.**
**Dongguan, Guangdong 523860 (CN)**

(72) Inventors:
• **LI, Haitao**
**Dongguan, Guangdong 523860 (CN)**
• **HU, Yi**
**Dongguan, Guangdong 523860 (CN)**

(74) Representative: **RGTH
Patentanwälte PartGmbB
Neuer Wall 10
20354 Hamburg (DE)**

(56) References cited:
EP-A1- 2 426 980    WO-A1-2020/089513
CN-A- 101 453 770    CN-A- 102 572 989
CN-A- 111 148 144    US-A1- 2015 172 907

• ERICSSON: "Relaxed monitoring criterion in Idle
and Inactive mode", vol. RAN WG2, no. Prague,
Czech Republic; 20190826 - 20190830, 16 August
2019 (2019-08-16), XP051767772, Retrieved from
the Internet
<URL:http://www.3gpp.org/ftp/tsg_ran/WG2_RL
2/TSGR2_107/Docs/R2-1909986.zip> [retrieved
on 20190816]
• OPPO: "UE power Consumption Reduction in
RRM Measurements", 3GPP DRAFT; R1-1903351,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, vol. RAN
WG1, 22 February 2019 (2019-02-22), Mobile
Competence Centre ; 650, route des Lucioles ;
F-06921 Sophia-Antipolis Cedex ; France
, pages 1 - 8, XP051601027

---

**Description**

TECHNICAL FIELD

The present disclosure relates to the field of communication technology, in particular to a method for indicating cell measurement performed by a terminal device, a method for indicating cell measurement performed by a network device, a terminal device and a network device.

BACKGROUND

For a terminal device, no matter in connected state or idle state, the terminal device needs to measure all neighbor cells around, including the intra-frequency cell, the inter-frequency cell and the inter-system cell, to obtain the optimal serving cell. In a case that there are many measured frequency points, the cell measurement will cause the terminal device to consume a lot of power.

In order to solve this problem, a concept of relax measure is introduced into 5G protocol. The relax measure can reduce the measured frequency points, reduce the measurement time or prolong the measurement period of periodic measurement when the terminal device performs the cell measurement, so as to save the power consumption of terminal device. The existing 5G protocol involves the relax measure scheme of terminal device in disconnected state. The relax measure behavior in disconnected state is determined by the terminal device itself, and the network device cannot know the situation of the terminal device. Therefore, the cell measurement controllable by the network device cannot be provided. Related technologies can be found in the patent documents US 2015/172907A1 and EP 2 426980A1, and the non-patent documents "ERICSSON: 'Relaxed monitoring criterion in Idle and Inactive mode', 3GPP DRAFT· R2-1909986" and "OPPO: 'UE power Consumption Reduction in RRM Measurements', 3GPP Draft; R1-1903351".

SUMMARY

The embodiments of the present disclosure provide a method for indicating cell measurement, a terminal device and a network device, which can solve the problem of how to provide a cell measurement scheme controllable by the network device. The invention is set out in the appended set of claims.

In the method for indicating cell measurement provided by the embodiments of the present disclosure, the network device sends the evaluation parameter of the low-speed mobility criterion to the terminal device, so that the terminal device can evaluate the mobility state of the terminal device itself according to the evaluation parameter and the measurement result of the serving cell, and the mobility state of the terminal device itself is reported to the network device for the network device to determine a cell measurement state (including normal measure, and/or relax measure). In this way, the network device can know the mobility state of the terminal device, and the network device can determine the cell measurement state with reference to the mobility state of the terminal device, and instruct the terminal device to perform cell measurement (normal measure, and/or relax measure), thus providing a cell measurement scheme controllable by the network device.

BRIEF DESCRIPTION OF THE DRAWINGS

FIG. 1 is a schematic diagram of an architecture of an example wireless communication system.
FIG. 2 is a schematic diagram of a method for indicating cell measurement provided by the embodiments of the present disclosure.
FIG. 3 is a schematic diagram of a structure of a terminal device provided by the embodiments of the present disclosure, which is not covered by the invention.
FIG. 4 is a schematic diagram of a structure of a network device provided by the embodiments of the present disclosure, which is not covered by the invention.
FIG. 5 is a diagram of a structure of a base station provided by the embodiments of the present disclosure.
FIG. 6 is a schematic diagram of a structure of a mobile phone provided by the embodiments of the present disclosure.

DETAILED DESCRIPTION

The technical solutions of the embodiments of the present disclosure will be described below in combination with the accompanying drawings in the embodiments of the present disclosure. It is obvious that the described embodiments are only part of the embodiments of the present disclosure, not all embodiments.

In the embodiments of the present disclosure, the words "exemplarily" or "for example" are used as examples, illustrations, or illustrations. Any embodiment or design solution described as "exemplarily" or "for example" in embodiments of the present disclosure should not be construed as being more preferred or advantageous than other embodiments or design solution. Rather, the use of the words "exemplarily" or "for example" is intended to present the relevant concepts in a concrete manner.

In the present disclosure, the term "and/or" is merely an association relationship that describes associated objects, representing that there can be three relationships, for example, A and/or B, which can represent that there are three situations: A alone, A and B simultaneously, and B alone. In the present disclosure, the symbol "/" represents that the relationship of the associated objects is or, for example, A/B represents AorB.

In the description of the present disclosure, "multiple" means two or more unless otherwise stated.

The technical solutions provided by the present disclosure can be applied to various communication systems, such as a 5G communication system, a future evolution system, a plurality of communication fusion systems, and the like. It can include a plurality of application scenarios, such as machine to machine (M2M), D2M, macro-micro communication, enhanced mobile broadband (eMBB), ultra-reliable & low latency communication (uRLLC) and massive machine type communication (mMTC). For example, the embodiments of the present disclosure can be applied to cell measurement of the terminal device in a connected state in a 5G communication system.

At present, the main application scenarios of 5G are: enhanced mobile broadband (eMBB), ultra-reliable and low latency communications (URLLC), and massive machine type communication (mMTC).

In related technologies, new radio (NR) can be deployed independently. In order to reduce air signal, quickly restore wireless connection and quickly restore data services in 5G network environment, a new radio resource control (RRC) state is defined, i.e., RRC_inactive state. This state is different from the RRC_idle state and the RRC_connected state. The three RRC states in 5G network environment are explained in the following respectively.

RRC_idle: Mobility is cell reselection based on terminal device, paging is initiated by core network, paging area is configured by core network, user equipment (UE) access layer (AS) context is not existed on base station side, and RRC connection does not exist.

RRC_connected: RRC connection exists, the base station and UE have UE AS context, the network side knows that the location of UE is at the specific cell level, the mobility is the mobility controlled by the network side, and unicast data can be transmitted between UE and the base station.

RRC_inactive: Mobility is cell selection reselection based on UE, connection between CN-NR exists, UE AS context exists on a base station, paging is triggered by RAN (radio access network), paging area based on RAN is managed by RAN, and network side knows that the location of UE is based on paging area level of RAN.

For terminal device, no matter in connected state or disconnected state, in order to obtain the optimal serving cell, the terminal device should measure all neighbor cells around, including the same frequency cell, different frequency cell and different system cell. When there are many frequency points measured, the cell measurement will cause the terminal device to consume a lot of electricity.

Especially for the lightweight level terminal (NR-light) introduced in NR in R17, this kind of terminal generally needs to reduce the power consumption of terminal device because of its small size and limited battery capacity. At present, NR-light mainly includes the following three types: Industrial Wireless Sensors, Video surveillance and Wearables.

Compared with the devices in URLLC scenario, the Industrial Wireless Sensors have latency and reliability with relatively low requirement, and the cost and power consumption of the device are also lower than those in URLLC and eMBB.

The Video surveillance is mainly used for video surveillance in smart cities and industrial factories. Specifically, it can be applied to the collection and processing of data in smart cities, so as to monitor and control urban resources more effectively and provide more effective services for urban residents.

The Wearables includes smart watches, electronic health device and some medical monitoring device, etc. One common feature of these devices is small-sized devices.

In order to solve the problem of large power consumption of the above terminal device when performing cell measurement, relax measure is introduced into 5G protocol, which can reduce the measured frequency points, reduce the measurement time or prolong the measurement period of periodic measurement when the terminal device performs the cell measurement, thus achieving the purpose of saving power consumption of the terminal device.

Specifically, in related technologies, two sets of judgment criterion for radio resource management (RRM) relax measure are introduced in R16 terminal energy saving topic, which are "UE is located not-cell-edge" criterion and "low-mobility" criterion. Both sets of criterion perform measurement by the "cell-level" measurement result of UE on the serving cell.

1. The "UE is located not-cell-edge" criterion

For the criterion, the network device will configure a reference signal receiving power (RSRP) threshold, and may further configure an RSRQ threshold. When the RSRP of the UE in the serving cell is greater than the RSRP threshold, and in a case that the network device configures the RSRQ threshold, the RSRQ of the UE in the serving cell is greater than the RSRQ threshold, it is considered that the UE meets the "UE is located not-cell-edge" criterion.

The RSRP threshold configured by network device for the "UE is located not-cell-edge" criterion should be less than the RSRP intra-frequency measurement threshold (SIntraSearchP) and RSRP inter-frequency measurement threshold (SnonIntraSearchP). If the network device configures the RSRQ threshold of the "UE is located not-cell-edge" criterion at the same time, the RSRQ threshold for the "UE is not-cell-edge" criterion needs to be less than the RSRQ intra-frequency measurement threshold (SIntraSearchQ) and the RSRQ inter-frequency measurement threshold (Snon-IntraSearchQ).

2. The "low mobility" criterion

For the criterion, the network device will configure the evaluation duration of RSRP change (TsearchDeltaP) and the threshold value of RSRP change value ($S_{searchDeltaP}$). When the RSRP change amount of UE in the serving cell in a period of time TsearchDeltaP is less than $S_{searchDeltaP}$, it is considered that the UE meets the "low mobility" criterion.

After completing cell selection/reselection, the UE needs to perform normal RRM measure (i.e. normal cell measure) in at least a period of time TsearchDeltaP.

In the existing 5G protocol, the relax measure scheme of the terminal device in the disconnected state is involved by using the above criterion. The relax measure behavior in disconnected state is generally determined by the terminal device itself, but the relax measure scheme in connected state is not discussed. Therefore, how to perform relax measure in connected state and how to provide cell measurement controllable by network device are urgent problems to be solved.

Based on the above problems, in the method for indicating cell measurement provided by the embodiments of the present disclosure, the network device sends the evaluation parameter of the low-speed mobility criterion to the terminal device, so that the terminal device evaluates the mobility state of the terminal device itself according to the evaluation parameter and the measurement result of the serving cell, and the mobility state of the terminal device itself is reported to the network device for the network device to determine a cell measurement state. In this way, the network device can know the mobility state of the terminal device, and the network device can determine the cell measurement state with reference to the mobility state of the terminal device, and instruct the terminal device to perform cell measurement (normal measure, and/or, relax measure), thus providing a cell measurement scheme controllable by the network device.

The method for indicating cell measurement provided by the embodiments of the present disclosure can be applied to the terminal device in the connected state.

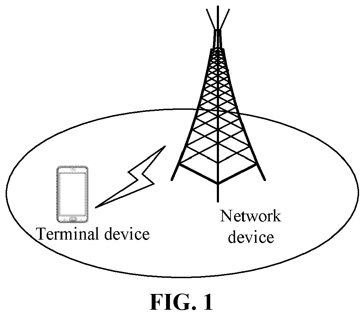

The method for indicating cell measurement provided by the embodiments of the present disclosure may be applied to a wireless communication system. Exemplarily, FIG. 1 shows a schematic diagram of a system architecture of a wireless communication system provided by the embodiments of the present disclosure. In FIG. 1, the wireless communication system includes a terminal device and a network device. In practical application, the connection between the above terminal device and network device may be a wireless connection. When the method for indicating cell measurement provided by the embodiments of the present disclosure is applied to the wireless communication system shown in FIG. 1, the network device of FIG. 1 may send an evaluation parameter of a low-speed mobility criterion to the terminal device of FIG. 1, so that the terminal device can evaluate the mobility state of the terminal device itself according to the evaluation parameter and a measurement result of the serving cell, and the mobility state of the terminal device itself is reported to the network device. In this way, the network device can know the mobility state of the terminal device, and the network device can determine the cell measurement state with reference to the mobility state of the terminal device, and instruct the terminal device to perform cell measurement (normal measure, and/or relax measure), thus providing a cell measurement scheme controllable by the network device.

The terminal device in the embodiments of the present disclosure may be called an user equipment (UE). The terminal device may be a personal communication service (PCS) telephone, a cordless telephone, a session initiation protocol (SIP) telephone, a wireless local loop (WLL) station, a personal digital assistant (PDA), etc. The terminal device may also be a mobile phone, a mobile station (MS), a mobile terminal, a laptop, etc. The terminal device may communicate with one or more core networks via a radio access network (RAN). For example, the terminal device may be a mobile telephone (or "cellular" telephone) or a computer with a mobile terminal, etc. For example, the terminal device may also be a portable, pocket-sized, hand-held, computer-built or vehicle-mounted mobile device that exchanges voice and/or data with a wireless access network. The terminal device may also be a handheld device with wireless communication function, a computing device or other processing device connected to a wireless modem, a vehicle-mounted device, a wearable device, a terminal device in a future 5G network or a terminal device in a future evolved network, etc. The above is only an example, and is not limited to this in practical application.

The network device in the embodiments of the present disclosure may be an evolutionary node B (referred to as eNB or e-NodeB), macro base station, a micro base station (also called "small base station"), a pico base station, an access point (AP), a transmission point (TP) or a new generation Node B (gNodeB) in an LTE system, an NR communication system or an authorized auxiliary access long-term evolution (LAA-LTE) system. The network device may also be other types of network devices in a future 5G communication system or a future evolved network.

The method for indicating cell measurement provided by the embodiments of the present disclosure may be implemented through the interaction between the network device and the terminal device, which will be described in detail below.

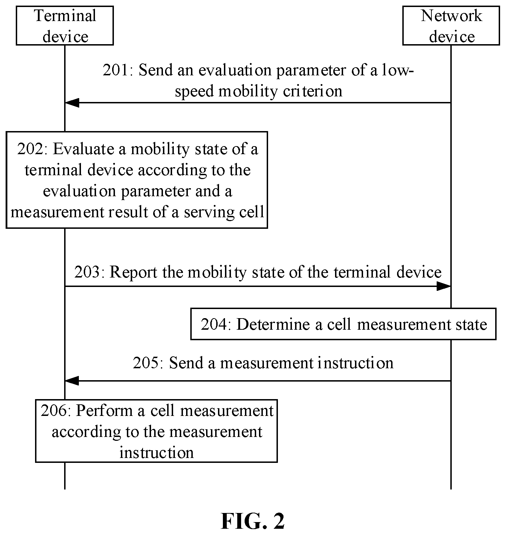

As shown in FIG. 2, the embodiments of the present disclosure provide a method for indicating cell measurement. The method includes the following operations.

In operation 201, a network device sends an evaluation parameter of the low-speed mobility criterion to a terminal device.

Accordingly, the terminal device receives the evaluation parameter of the low-speed mobility criterion sent by the network device.

The evaluation parameter of the low-speed mobility criterion includes the following (1) and (2).

(1) The first duration.

The first duration is the evaluation duration of the reference signal received signal strength change.

Alternatively, the reference signal received signal strength is represented by RSRP, or represented by RSRQ, or represented by RSRP and RSRQ.

Alternatively, if the reference signal received signal strength is RSRP, the first duration is TsearchDeltaP.

(2) A change threshold value of a reference signal received signal strength.

Alternatively, if the reference signal received signal strength is RSRP, the change threshold value of the reference signal received signal strength is a change threshold value of RSRP (i.e. SsearchDeltaP).

Alternatively, the evaluation parameter of the low-speed mobility criterion may also include the following (3).

(3) Hysteresis (Hyst).

The hysteresis parameter is a parameter for preventing ping-pong from entering and departing a low-speed mobility state.

Alternatively, in the embodiments of the present disclosure, the network device may carry the above evaluation parameter of the low-speed mobility criterion in RRC signaling, media access control (MAC) signaling or other messages to send it to the terminal device.

Alternatively, the above RRC signaling may be RRC dedicated signaling.

Alternatively, the above MAC signaling may be a MAC control element (CE).

In operation 202, a mobility state of a terminal device is evaluated by the terminal according to the evaluation parameter and a measurement result of a serving cell.

Alternatively, the above measurement result of the serving cell may include a reference signal received signal strength of the serving cell, i.e. a measurement value of RSRP, and/or, a measurement value of RSRQ are included.

In the embodiments of the present disclosure, the mobility state of the terminal device may include two kinds, i.e., low-speed mobility and non-low-speed mobility. The mobility state of the terminal device obtained by the above evaluation may be low-speed mobility or non-low-speed mobility.

Alternatively, the terminal device may determine the magnitude relationship between the change amount of the reference signal received signal strength of the serving cell in the first duration and the change threshold value of the reference signal received signal strength, and evaluate the mobility state of the terminal device based on it.

The above operation 202 is replaced by the following operation 202a.

In operation 202a, the mobility state of the terminal device is evaluated according to the evaluation parameter of the low-speed mobility criterion, the measurement result of the serving cell, and a condition of the low-speed mobility criterion.

The operation 202a is implemented by one of the following two implementing manners.

In the first implementation manner, if the measurement result continuously satisfies an entry condition of the low-speed mobility criterion in the first duration, it is determined that the mobility state of the terminal device is in low-speed mobility.

In the second implementation manner, if the measurement result continuously satisfies a departure condition of the low-speed mobility criterion in the first duration, it is determined that the mobility state of the terminal device is in non-low-speed mobility.

Alternatively, the condition of the low-speed criterion include at least one of the following and (B).

(A) Entry condition of the low-speed mobility criterion.

In the embodiments of the present disclosure, the entry condition of the low-speed mobility criterion includes the following.

$$\text{Condition 1: } (\text{Srxlev}_{\text{Ref}}\text{-Srxlev}) < \text{S}_{\text{searchDeltaP}}.$$

$\text{Srxlev}_{\text{Ref}}$ is a reference value of the reference signal received signal strength, Srxlev is a measurement value of the reference signal received signal strength of the serving cell, and $\text{S}_{\text{searchDeltaP}}$ is a change threshold value of the reference signal received signal strength.

Alternatively, if a hysteresis parameter is introduced, the entry condition of the low-speed mobility criterion includes the following.

$$\text{Condition 2: } (\text{Srxlev}_{\text{Ref}}\text{-Srxlev} + \text{Hyst}) < \text{S}_{\text{searchDeltaP}}.$$

Hyst is the hysteresis parameter.

(B) A departure condition of the low-speed mobility criterion.

In the embodiments of the present disclosure, the departure condition of the low-speed mobility criterion includes the following.

$$\text{Condition 3: } (\text{Srxlev}_{\text{Ref}}\text{-Srxlev}) > \text{S}_{\text{searchDeltaP}}.$$

$\text{Srxlev}_{\text{Ref}}$ is a reference value of the reference signal received signal strength, Srxlev is a measurement value of the reference signal received signal strength of the serving cell, and $\text{S}_{\text{searchDeltaP}}$ is a change threshold value of the reference signal received signal strength.

Alternatively, if a hysteresis parameter is introduced, the entry condition of the low-speed mobility criterion includes the following.

$$\text{Condition 4: } (\text{Srxlev}_{\text{Ref}}\text{-Srxlev-Hyst}) > \text{S}_{\text{searchDeltaP}}.$$

Hyst is the hysteresis parameter.

Alternatively, in above condition 1, condition 2, condition 3 or condition 4, an initial value of $\text{Srxlev}_{\text{Ref}}$ may be a current measurement value of the reference signal received signal strength when the terminal device receives the evaluation parameter of the low-speed mobility criterion sent by the network device.

Further alternatively, the initial value of $\text{Srxlev}_{\text{Ref}}$ may be a measurement value of the reference signal received signal strength detected by the terminal device for the first time after receiving the evaluation parameter of the low-speed mobility criterion sent by the network device.

Alternatively, $\text{Srxlev}_{\text{Ref}}$ may be updated.

There are two methods to update $\text{Srxlev}_{\text{Ref}}$.

In the first method, the $\text{Srxlev}_{\text{Ref}}$ is updated to the current measurement value of the reference signal received signal strength when the entry condition of the low-speed mobility criterion is not satisfied.

In the second method, the $\text{Srxlev}_{\text{Ref}}$ is updated to the current measurement value of the reference signal received signal strength when the departure condition of the low-speed mobility criterion is satisfied.

The $\text{Srxlev}_{\text{Ref}}$ may be updated by at least one of the above two methods.

In the embodiments of the present disclosure, when evaluating the mobility state of the terminal device, it is considered that the mobility state of the terminal device is in low-speed mobility if the entry condition of the low-speed mobility criterion is satisfied, , and the mobility state of the terminal device is in non-low-speed mobility if the departure condition of the low-speed mobility criterion is satisfied.

In operation 203, the terminal device reports the mobility state of the terminal device to the network device.

The mobility state of the terminal device is used for providing reference for the network device to instruct the terminal device to perform cell measurement.

Accordingly, the network device receives the mobility state of the terminal device reported by the terminal device.

Alternatively, the network device may refer to the mobility state of the terminal device to determine how to instruct the terminal device to perform cell measurement and generate corresponding measurement instruction.

In the embodiments of the present disclosure, after the terminal device evaluates and obtains the mobility state of the terminal device, the mobility state of the terminal device may be reported to the network device.

Alternatively, the terminal device may report the mobility state of the terminal device to the network device on its own initiative after receiving the evaluation parameter of the low-speed mobility criterion sent by the network device.

Alternatively, the terminal device may report the mobility state of the terminal device to the network device based on an indication of the network device.

Alternatively, the terminal device may evaluate the low-speed mobility criterion according to the measurement result of the serving cell. When the entry condition of low-speed mobility criterion is satisfied, the terminal device may trigger a reporting process to indicate to the network device that the terminal device satisfies the low-speed mobility criterion, and when the departure condition of the low-speed mobility criterion is satisfied, the terminal device triggers the reporting process to indicate to the network device that the terminal device does not satisfy the low-speed mobility criterion.

Alternatively, the mobility state of the terminal device may be reported through RRC signaling or MAC signaling.

Alternatively, the RRC signaling may be RRC dedicated signaling, and the MAC signaling may be MAC CE.

The signaling may be RRC dedicated signaling, MAC CE, etc.

Further, in the embodiments of the present disclosure, the terminal device may report the measurement result of the serving cell of the terminal device.

Accordingly, the network device may receive the measurement result of the serving cell reported by the terminal device.

Alternatively, the terminal device may report the measurement result of the serving cell on its own initiative or based on the instruction of the network device.

Alternatively, the network device may instruct the terminal device to report the measurement result of the serving cell to the network device before the terminal device receives the measurement result of the serving cell reported by the terminal device.

The measurement result of the serving cell of the terminal device may include a measurement value of the reference signal received signal strength, i.e. a measurement value of RSRP, and/or a measurement value of RSRQ.

Alternatively, the terminal device may, under the configuration of the network device (for example, in Step 1, the terminal device is instructed to simultaneously report the measurement result of the serving cell by the RRC dedicated signaling), increase the reporting of the measurement result of the serving cell of the terminal device in the process of reporting the mobility state of the terminal device.

It should be noted that, in the embodiments of the present disclosure, the above two messages of the mobility state of the terminal device and the measurement result of the serving cell may be carried in the same message (for example, in the same RRC dedicated signaling or in the same MAC CE) for reporting to the network device. These two messages may be carried in different messages (for example, the mobility state of the terminal device is carried in the RRC dedicated signaling, and the measurement result of the serving cell is carried in the MAC CE) for reporting to the network device.

Further, when the two messages of mobility state of the terminal device and the measurement result of the serving cell are respectively carried in different messages for reporting to the network device, the embodiments of the present disclosure do not limit the reporting sequences of the two messages. That is, the mobility state of the terminal device may be reported first, and then the measurement result of the serving cell is reported, or the measurement result of the serving cell may be reported first, and then the mobility state of the terminal device is reported, or the mobility state of the terminal device and the measurement result of the serving cell are reported at the same time.

In operation 204, the network device determines the cell measurement state.

The cell measurement state may be a state in which the terminal device performs cell measurement, and the cell measurement state includes relax measurement and/or normal measure.

After receiving the mobility state reported by the terminal device, the network device may judge whether to determine the cell measurement state according to the mobility state, and determine, according to the judgment result, that the cell measurement state is determined according to the mobility state reported by the terminal device, or the cell measurement state is determined according to other parameters.

Alternatively, in the parameters for the network device to determine the cell measurement state, if the priority of the signal quality of the serving cell is greater than the mobility state of the terminal device, the network device may judge that the cell measurement state is not determined according to the mobility state of the terminal device, but is determined according to the signal quality of the serving cell.

Alternatively, in the parameters for the network device to determine the cell measurement state, if the priority of the signal quality of the serving cell is greater than the mobility state of the terminal device, the network device may judge that the cell measurement state is determined according to the signal quality of the serving cell and the mobility state of the terminal device.

Alternatively, in the parameters for the network device to determine the cell measurement state, if the priority of the signal quality of the serving cell is less than the mobility state of the terminal device, the network device may determine the cell measurement state according to the mobility state of the terminal device.

Alternatively, in the parameters for the network device to determine the cell measurement state, if the priority of the signal quality of the serving cell is less than the mobility state of the terminal device, the network device may determine the cell measurement state according to the signal quality of the serving cell and the mobility state of the terminal device.

The above operation of determining cell measurement state by the network device may include the following two possible implementation manners.

In one possible implementation, the network device may determine the cell measurement state according to the mobility state of the terminal device reported by the network device.

In another possible implementation, the network device may determine the cell measurement state according to other parameters.

Exemplarily, the network device may obtain the signal quality of the serving cell of the terminal device, and then judge whether the signal quality of the serving cell of the terminal device is greater than the signal quality threshold value. If the signal quality of the serving cell is greater than the signal quality threshold value, the terminal device is determined not to be at the edge of the serving cell. At this time, the probability for the terminal device performing cell switching is low, and the terminal device may determine that the cell measurement state is in the relax measure. If the signal quality of the serving cell is less than or equal to the signal quality threshold value, the terminal device is determined to be at the edge of the serving cell. At this time, the probability for the terminal device performing cell switching is high, and the cell measurement state may be determined as relax measure.

Exemplarily, after the network device receives the mobility state of the terminal device reported by the terminal device, if the mobility state of the terminal device is in low-speed mobility state, it may further judge whether the signal quality of the serving cell of the terminal device is greater than the signal quality threshold value. If the signal quality of the serving cell is greater than the signal quality threshold value, it is determined that the terminal device is not at the edge of the serving cell. At this time, the terminal device is not at the edge of the serving cell and is in low-speed mobility state, so the probability for the terminal device performing cell switching is low, and the terminal device may determine that the cell measurement state is in the relax measure. If the signal quality of the serving cell is less than or equal to the signal quality threshold value, it is determined that the terminal device is at the edge of the serving cell. At this time, although the terminal device is in low-speed mobility state, it is at the edge of the serving cell, so the terminal device may perform cell switching. At this time, the terminal device may determine that the cell measurement state is in the normal measure.

Exemplarily, after the network device receives the mobility state of the terminal device reported by the terminal device, if the mobility state of the terminal device is in non-low-speed mobility state, it may further judge whether the signal quality of the serving cell of the terminal device is greater than the signal quality threshold value. If the signal quality of the serving cell is greater than the signal quality threshold value, it is determined that the terminal device is not at the edge of the serving cell. At this time, although the terminal device is in the non-low-speed mobility state, it is not at the edge of the serving cell, so the possibility for the terminal device performing cell switching is low, and the terminal device may determine that the cell measurement state is in the relax measure. If the signal quality of the serving cell is less than or equal to the signal quality threshold value, it is determined that the terminal device is at the edge of the serving cell. At this time, the terminal device is at the edge of the serving cell and is in a non-low-speed mobility state, and the probability for the terminal device performing cell switching is high. At this time, the terminal device may determine that the cell measurement state is in the normal measure.

In operation 205, the network device sends a measurement instruction to the terminal device.

After the above operation 204, the network device may indicate the cell measurement state to the terminal device. Alternatively, it may be implemented by the above operation 205.

Alternatively, the measurement instruction may be determined according to the mobility state of the terminal device. The measurement instruction is configured to instruct the terminal device to perform a relax measure, and/or configured to instruct the terminal device to perform a normal measure.

Alternatively, the measurement instruction may be determined according to the mobility state of the terminal device and the measurement result of the serving cell in the case that the terminal device reports the measurement result of the serving cell of the terminal device to the network device.

Exemplarily, in the embodiments of the present disclosure, in a case that the network device receives that the mobility state of the terminal device is in the low-speed mobility state, it may be further determined that whether the signal quality of the serving cell in the measurement result of the serving cell is greater than a certain threshold value. If the signal quality of the serving cell is greater than the threshold value, the current signal quality of the serving cell is relatively good, and the demand for cell reselection is not great at this time, then the relax measure is determined to be performed on the serving cell and/or the neighbor cell according to the combination of the low-speed mobility state of the terminal device and the signal quality of the serving cell. If the signal quality of the serving cell is less than or equal to the threshold value, the current signal quality of the serving cell is relatively poor, and the demand for cell reselection is relatively great at this time, then the normal measure is determined to be performed on the serving cell and/or the neighbor cell according to the combination of the low-speed mobility state of the terminal device and the signal quality of the serving cell.

Alternatively, the measurement instruction may include the following situations.

In the first situation, the measurement instruction is a measurement instruction for the serving cell of the terminal device.

In the second situation, the measurement instruction is a measurement instruction for the neighbor cell (i.e., the neighbor cell of the serving cell of the terminal device) of the terminal device.

In the third situation, the measurement instruction is a measurement instruction for the serving cell and the neighbor cell of the terminal device.

In operation 205, the terminal device performs cell measurement according to the measurement instruction.

Alternatively, for the above first situation, the terminal device may perform normal measure or relax measure on the serving cell of the terminal device. For the above second situation, the terminal device may perform normal measure or relax measure on the neighbor cell of serving cell of the terminal device. For the above third situation, the terminal device may perform normal measure or relax measure on the serving cell of the terminal device, and perform normal measure or relax measure on the neighbor cell of serving cell of the terminal device.

In the method for indicating cell measurement provided by the embodiments of the present disclosure, the network device sends the evaluation parameter of the low-speed mobility criterion to the terminal device, so that the terminal device evaluates the mobility state of the terminal device itself according to the evaluation parameter and the measurement result of the serving cell. The mobility state of the terminal device itself is reported to the network device. In this way, the network device can know the mobility state of the terminal device, and the network device can instruct the terminal device to perform cell measurement (normal measure, and/or relax measure) with reference to the mobility state of the terminal device, thus providing a cell measurement scheme controllable by the network device.

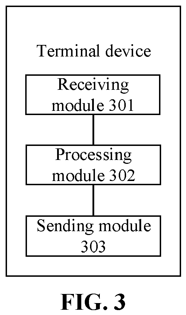

As shown in FIG. 3 which is not covered by the invention, the embodiments of the present disclosure provide a terminal device. The terminal device includes a receiving module 301, a processing module 302 and a sending module 303.

The receiving module 301 is configured to receive an evaluation parameter of a low-speed mobility criterion sent by a network device.

The processing module 302 is configured to evaluate a mobility state of a terminal device according to the evaluation parameter and a measurement result of a serving cell.

The sending module 303 is configured to report the mobility state of the terminal device to the network device for the network device to determine a cell measurement state.

Alternatively, the receiving module 301 is further configured to receive a measurement instruction sent by the network device. The measurement instruction is configured to instruct the terminal device to perform a relax measure, and/or configured to instruct the terminal device to perform a normal measure.

Alternatively, the measurement instruction is determined according to the mobility state of the terminal device.

Alternatively, the mobility state of the terminal device includes low-speed mobility or non- low-speed mobility.

The evaluation parameter of the low-speed mobility criterion includes a first duration and a change threshold value of a reference signal received signal strength. The first duration is an evaluation duration of the reference signal received signal strength change.

The reference signal received signal strength is represented by following signals: Reference Signal Received Power (RSRP), and/or, Reference Signal received Quality (RSRQ).

Alternatively, the processing module is specifically configured to evaluate the mobility state of the terminal device according to the evaluation parameter, the measurement result of the serving cell, and a condition of the low-speed mobility criterion.

Alternatively, the condition of the low-speed mobility criterion includes an entry condition of the low-speed mobility criterion and/or a departure condition of the low-speed mobility criterion.

Alternatively, the entry condition of the low-speed mobility criterion includes:

$$(\text{Srxlev}_{\text{Ref}}-\text{Srxlev}) < S_{\text{searchDeltaP}}.$$

$\text{Srxlev}_{\text{Ref}}$ is a reference value of the reference signal received signal strength, Srxlev is a measurement value of the reference signal received signal strength of the serving cell, and $S_{\text{searchDeltaP}}$ is a change threshold value of the reference signal received signal strength.

Alternatively, the departure condition of the low-speed mobility criterion includes: $(\text{Srxlev}_{\text{Ref}}-\text{Srxlev}) > S_{\text{searchDeltaP}}$.

$\text{Srxlev}_{\text{Ref}}$ is a reference value of the reference signal received signal strength, Srxlev is a measurement value of the reference signal received signal strength of the serving cell, and $S_{\text{searchDeltaP}}$ is a change threshold value of the reference signal received signal strength.

Alternatively, the evaluation parameter further includes a hysteresis parameter. The hysteresis parameter is a parameter for preventing ping-pong from entering and departing a low-speed mobility state.

Alternatively, the entry condition of the low-speed mobility criterion includes:

$$(\text{Srxlev}_{\text{Ref}}-\text{Srxlev} + \text{Hyst}) < S_{\text{searchDeltaP}}.$$

$\text{Srxlev}_{\text{Ref}}$ is a reference value of the reference signal received signal strength, Srxlev is a measurement value of the reference signal received signal strength of the serving cell, $S_{\text{searchDeltaP}}$ is a change threshold value of the reference signal received signal strength, and Hyst is the hysteresis parameter.

Alternatively, a departure condition of the low-speed mobility criterion includes: $(\text{Srxlev}_{\text{Ref}}-\text{Srxlev}-\text{Hyst}) > S_{\text{searchDeltaP}}$.

$\text{Srxlev}_{\text{Ref}}$ is a reference value of the reference signal received signal strength, Srxlev is a measurement value of the reference signal received signal strength of the serving cell, $S_{\text{searchDeltaP}}$ is a change threshold value of the reference signal received signal strength, and Hyst is the hysteresis parameter.

Alternatively, an initial value of the $\text{Srxlev}_{\text{Ref}}$ is a current measurement value of the reference signal received signal strength when the terminal device receives the evaluation parameter of the low-speed mobility criterion sent by the network device.

Alternatively, the processing module 302 is further configured to update the $\text{Srxlev}_{\text{Ref}}$ to the current measurement value of the reference signal received signal strength when the entry condition of the low-speed mobility criterion is not satisfied.

Alternatively, the processing module 302 is further configured to update the $\text{Srxlev}_{\text{Ref}}$ to the current measurement value of the reference signal received signal strength when the departure condition of the low-speed mobility criterion is satisfied.

Alternatively, the processing module 302 is specifically configured to determine that the mobility state of the terminal device is in low-speed mobility when the measurement result continuously satisfies an entry condition of the low-speed mobility criterion in a first duration.

Alternatively, the processing module 302 is specifically configured to determine that the mobility state of the terminal device is in non-low-speed mobility when the measurement result continuously satisfies a departure condition of the low-speed mobility criterion in the first duration.

Alternatively, the sending module 303 is further configured to report the measurement result of the serving cell to the network device.

Alternatively, the mobility state of the terminal device and the measurement result of the serving cell are reported through a same message.

Alternatively, the mobility state of the terminal device and the measurement result of the serving cell are reported through different messages.

Alternatively, the sending module 303 is specifically configured to report the measurement result of the serving cell to the network device according to an indication of the network device.

Alternatively, the measurement instruction is determined according to the mobility state of the terminal device and the measurement result of the serving cell.

Alternatively, the processing module 302 is further configured to perform a cell measurement according to the measurement instruction.

Alternatively, the measurement instruction is for the serving cell of the terminal device, and/or the measurement instruction is for a neighbor cell of the terminal device.

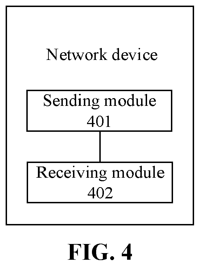

As shown in FIG. 4 which is not covered by the invention, the embodiments of the present disclosure provide a network device. The network device includes a sending module 401 and a receiving module 402.

The sending module 401 is configured to send an evaluation parameter of a low-speed mobility criterion to a terminal device.

The receiving module 402 is configured to receive a mobility state of the terminal device reported by the terminal device to determine a cell measurement state. The mobility state of the terminal device is evaluated and obtained according to the evaluation parameter and a measurement result of a serving cell.

Alternatively, the sending module 401 is further configured to send a measurement instruction to the terminal device. The measurement instruction is configured to instruct the terminal device to perform a relax measure, and/or, configured to instruct the terminal device to perform a normal measure.

Alternatively, the measurement instruction is determined according to the mobility state of the terminal device.

Alternatively, the mobility state of the terminal device includes low-speed mobility, or, non-low-speed mobility.

Alternatively, the evaluation parameter of the low-speed mobility criterion includes a first duration and a change threshold value of a reference signal received signal strength. The first duration is an evaluation duration of the reference signal received signal strength change.

Alternatively, the reference signal received signal strength is represented by following signals: Reference Signal Received Power (RSRP), and/or, Reference Signal received Quality (RSRQ).

Alternatively, the mobility state of the terminal device is evaluated and obtained according to the evaluation parameter, the measurement result of the serving cell, and a condition of the low-speed mobility criterion.

The condition of the low-speed mobility criterion includes an entry condition of the low-speed mobility criterion; and/or, a departure condition of the low-speed mobility criterion.

Alternatively, the entry condition of the low-speed mobility criterion includes:

$$(Srxlev_{Ref}-Srxlev) < S_{searchDeltaP}.$$

$Srxlev_{Ref}$ is a reference value of the reference signal received signal strength, Srxlev is a measurement value of the reference signal received signal strength of the serving cell, and $S_{searchDeltaP}$ is a change threshold value of the reference signal received signal strength.

Alternatively, the departure condition of the low-speed mobility criterion includes: $(Srxlev_{Ref}-Srxlev) > S_{searchDeltaP}$.

$Srxlev_{Ref}$ is a reference value of the reference signal received signal strength, Srxlev is a measurement value of the reference signal received signal strength of the serving cell, and $S_{searchDeltaP}$ is a change threshold value of the reference signal received signal strength.

Alternatively, the evaluation parameter further includes a hysteresis parameter. The hysteresis parameter is a parameter for preventing ping-pong from entering and departing a low-speed mobility state.

Alternatively, the entry condition of the low-speed mobility criterion includes

$$(Srxlev_{Ref}-Srxlev + Hyst) < S_{searchDeltaP}.$$

$Srxlev_{Ref}$ is a reference value of the reference signal received signal strength, Srxlev is a measurement value of the reference signal received signal strength of the serving cell, $S_{searchDeltaP}$ is a change threshold value of the reference signal received signal strength, and Hyst is the hysteresis parameter.

Alternatively, the departure condition of the low-speed mobility criterion includes $(Srxlev_{Ref}-Srxlev-Hyst) > S_{searchDeltaP}$.

$Srxlev_{Ref}$ is a reference value of the reference signal received signal strength, Srxlev is a measurement value of the reference signal received signal strength of the serving cell, $S_{searchDeltaP}$ is a change threshold value of the reference signal received signal strength, and Hyst is the hysteresis parameter.

Alternatively, an initial value of the $Srxlev_{Ref}$ is a current measurement value of the reference signal received signal strength when the terminal device receives the evaluation parameter of the low-speed mobility criterion sent by the network device.

Alternatively, the receiving module 402 is further configured to receive the measurement result of the serving cell reported by the terminal device.

Alternatively, the mobility state of the terminal device and the measurement result of the serving cell are reported through a same message.

Alternatively, the mobility state of the terminal device and the measurement result of the serving cell are reported through different messages.

Alternatively, the sending module 401 is further configured to instruct the terminal device to report the measurement result of the serving cell to the network device before the receiving module 402 receives the measurement result of the serving cell reported by the terminal device.

The embodiments of the present disclosure further provide a network device. The network device includes a memory storing executable program codes and a processor coupled to the memory.

The processor invokes the executable program codes stored in the memory to execute the method for transmitting clock information executed by the network device in the embodiments of the present disclosure.

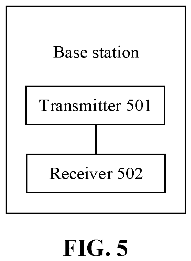

Exemplarily, as shown in FIG. 5, the network device in the embodiments of the present disclosure may be a base station. The base station includes a transmitter 501and a receiver 502.

A transmitter 501 is configured to send an evaluation parameter of a low-speed mobility criterion to a terminal device.

The receiver 502 is configured to receive a mobility state of the terminal device reported by the terminal device to determine a cell measurement state. The mobility state of the terminal device is evaluated and obtained according to the evaluation parameter and a measurement result of a serving cell.

Alternatively, the transmitter 501 is further configured to send a measurement instruction to the terminal device. The measurement instruction is configured to instruct the terminal device to perform a relax measure, and/or configured to instruct the terminal device to perform a normal measure.

Alternatively, the measurement instruction is determined according to the mobility state of the terminal device.

Alternatively, the mobility state of the terminal device includes low-speed mobility, or, non-low-speed mobility.

Alternatively, the evaluation parameter of the low-speed mobility criterion includes a first duration and a change threshold value of a reference signal received signal strength. The first duration is an evaluation duration of the reference signal received signal strength change.

Alternatively, the reference signal received signal strength is represented by following signals: Reference Signal Received Power (RSRP), and/or, Reference Signal received Quality (RSRQ).

Alternatively, the mobility state of the terminal device is evaluated and obtained according to the evaluation parameter, the measurement result of the serving cell, and a condition of the low-speed mobility criterion.

The condition of the low-speed mobility criterion includes an entry condition of the low-speed mobility criterion; and/or a departure condition of the low-speed mobility criterion.

Alternatively, the entry condition of the low-speed mobility criterion includes:

$$(\text{Srxlev}_{\text{Ref}}\text{-Srxlev}) < \text{S}_{\text{searchDeltaP}}.$$

$\text{Srxlev}_{\text{Ref}}$ is a reference value of the reference signal received signal strength, Srxlev is a measurement value of the reference signal received signal strength of the serving cell, and $\text{S}_{\text{searchDeltaP}}$ is a change threshold value of the reference signal received signal strength.

Alternatively, the departure condition of the low-speed mobility criterion includes: $(\text{Srxlev}_{\text{Ref}}\text{-Srxlev}) > \text{S}_{\text{searchDeltaP}}$.

$\text{Srxlev}_{\text{Ref}}$ is a reference value of the reference signal received signal strength, Srxlev is a measurement value of the reference signal received signal strength of the serving cell, and $\text{S}_{\text{searchDeltaP}}$ is a change threshold value of the reference signal received signal strength.

Alternatively, the evaluation parameter further includes a hysteresis parameter. The hysteresis parameter is a parameter for preventing ping-pong from entering and departing a low-speed mobility state.

Alternatively, the entry condition of the low-speed mobility criterion includes

$$(\text{Srxlev}_{\text{Ref}}\text{-Srxlev} + \text{Hyst}) < \text{S}_{\text{searchDeltaP}}.$$

$\text{Srxlev}_{\text{Ref}}$ is a reference value of the reference signal received signal strength, Srxlev is a measurement value of the reference signal received signal strength of the serving cell, $\text{S}_{\text{searchDeltaP}}$ is a change threshold value of the reference signal received signal strength, and Hyst is the hysteresis parameter.

Alternatively, the departure condition of the low-speed mobility criterion includes $(\text{Srxlev}_{\text{Ref}}\text{-Srxlev-Hyst}) > \text{S}_{\text{searchDeltaP}}$.

$\text{Srxlev}_{\text{Ref}}$ is a reference value of the reference signal received signal strength, Srxlev is a measurement value of the reference signal received signal strength of the serving cell, $\text{S}_{\text{searchDeltaP}}$ is a change threshold value of the reference signal received signal strength, and Hyst is the hysteresis parameter.

Alternatively, an initial value of the $\text{Srxlev}_{\text{Ref}}$ is a current measurement value of the reference signal received signal strength when the terminal device receives the evaluation parameter of the low-speed mobility criterion sent by the network device.

Alternatively, the receiver 502 is further configured to receive the measurement result of the serving cell reported by the terminal device.

Alternatively, the mobility state of the terminal device and the measurement result of the serving cell are reported through a same message.

Alternatively, the mobility state of the terminal device and the measurement result of the serving cell are reported through different messages.

Alternatively, the transmitter 501 is further configured to instruct the terminal device to report the measurement result of the serving cell to the network device before the receiver 502 receives the measurement result of the serving cell reported by the terminal device.

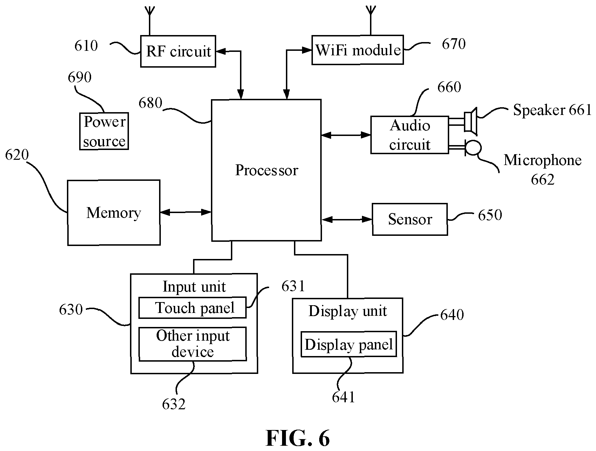

Exemplarily, the terminal device in the embodiments of the present disclosure may be a mobile phone. As shown in FIG. 6, the mobile phone may include components such as a radio frequency (RF) circuit 610, a memory 620, an input unit 630, a display unit 640, a sensor 650, an audio circuit 660, a wireless fidelity (WIF) module 670, a processor 680, and a power supply 690. The radio frequency circuit 610 includes a receiver 611 and a transmitter 612. Those skilled in the art will appreciate that the structure of the mobile phone shown in FIG. 6 does not limit the mobile phone and the mobile phone may include more or fewer components than illustrated, or combine certain components, or have different component arrangements.

The RF circuit 610 may be used for receiving and transmitting signals during sending and receiving information or talking. In particular, the downlink information of the base station is received and then is processed by the processor 680. In addition, the design uplink data is transmitted to the base station. Typically, RF circuit 610 includes, but is not limited to, an antenna, at least one amplifier, a transceiver, a coupler, a low noise amplifier (LNA), a diplexer and the like. In addition, the RF circuit 610 may also communicate with network and other devices through wireless communication. The wireless communication may use any communication standard or protocol, including but not limited to the global system of mobile communication (GSM), general packet radio service (GPRS), code division multiple access (CDMA), wideband code division multiple access (WCDMA), long term evolution (LTE), E-mail, short messaging service (SMS), etc.

The memory 620 may be used to store software programs and modules, and the processor 680 executes various functional applications and data processing of the mobile phone by running the software programs and modules stored in the memory 620. The memory 620 may mainly include a stored program area and a stored data area. The stored program area may store an operating system, an application program required for at least one function (such as a sound playback function, an image playback function, etc.), and the like. The stored data area may store data (such as audio data, phone book, etc.) created according to the use of the mobile phone. Additionally, memory 620 may include high-speed random access memory and may also include non-volatile memory, such as at least one disk memory device, flash memory device, or other volatile solid-state memory device.

The input unit 630 may be used to receive inputted numeric or character information and to generate key signal input related to user settings and function control of the mobile phone. Specifically, the input unit 630 may include a touch panel 631 and other input devices 632. The touch panel 631, also referred to as a touch screen, may collect user touch operations (such as, user operations on or near the touch panel 631 using any suitable object or accessory such as a finger, stylus, etc.) on or near the touch panel 631, and drive corresponding connection devices according to a preset program. Alternatively, the touch panel 631 may include two parts, i.e., a touch detection device and a touch controller. The touch detection device detects the touch orientation of the user, detects the signal brought by the touch operation, and transmits the signal to the touch controller. The touch controller receives the touch information from the touch detection device, converts it into contact coordinates, sends it to the processor 680, and receives and execute commands from the processor 680. In addition, the touch panel 631 may be implemented in various types such as resistance, capacitance, infrared ray and surface acoustic waves. The input unit 630 may include other input devices 632 in addition to the touch panel 631. Specifically, other input devices 632 may include but are not limited to one or more of a physical keyboard, function keys (such as, volume control keys, switch keys etc.) trackball, mouse, joystick etc.

The display unit 640 may be used to display information input by or provided to a user and various menus of a mobile phone. The display unit 640 may include a display panel 641 which may optionally be configured in the form of a liquid crystal display (LCD), an organic light-Emitting diode (OLED) or the like. Further, the touch panel 631 may overlay the display panel 641, and when the touch panel 631 detects a touch operation on or near it, it is transmitted to the processor 680 to determine a type of touch event, and then the processor 680 provides a corresponding visual output on the display panel 641 according to the type of touch event. Although in FIG. 6, the touch panel 631 and the display panel 641 are two independent components to implement the input and output functions of the mobile phone, in some embodiments, the touch panel 631 and the display panel 641 may be integrated to implement the input and output functions of the mobile phone.

The mobile phone may also include at least one sensor 650, such as, an optical sensor, a motion sensor and other sensors. Specifically, the optical sensor may include an ambient optical sensor and a proximity sensor. The ambient optical sensor can adjust the brightness of the display panel 641 according to the brightness of the ambient light and a proximity sensor can turn off the display panel 641 and/or the backlight when the mobile phone moves to the ear. As a kind of motion sensor, accelerometer sensor can detect the acceleration in all directions (usually three axes), and can detect the gravity and direction when it is still. It can be used to identify the application of mobile phone attitude (such as horizontal and vertical screen switching, related games, magnetometer attitude calibration), vibration recognition related functions (such as pedometer, knocking), etc. As for gyroscopes, barometers, hygrometers, thermometers, infrared sensors and other sensors that can be configured in mobile phone, they will not be repeated here.

Audio circuit 660, speaker 661, microphone 662 may provide an audio interface between the user and the mobile phone. The audio circuit 660 can transmit the electrical signal converted from received audio data to the speaker 661, and the speaker 661 converts the received audio data into an audio signal for output. On the other hand, the microphone 662 converts the collected sound signal into an electrical signal, which is received by the audio circuit 660 and converted into audio data, and then outputs the audio data to the processor 680 for processing, and then transmits the audio data to, for example, another mobile phone via the RF circuit 610, or outputs the audio data to the memory 620 for further processing.

WiFi is a short-distance wireless transmission technology. Mobile phone can help users send and receive e-mails, browse web pages and access streaming media through WiFi module 670, which provides users with wireless broadband Internet access. Although the WiFi module 670 is shown in FIG. 6, it is understood that it is not an essential component of a mobile phone and may be omitted as necessary without altering the essence of the present disclosure.

The processor 680 is a control center of the mobile phone, connects various parts of the whole mobile phone by various interfaces and lines, executes various functions of the mobile phone and processes data by running or executing software programs and/or modules stored in the memory 620, and calling data stored in the memory 620, thereby monitoring the mobile phone entirely. Alternatively, processor 680 may include one or more processing units. Preferably, the processor 680 may integrate an application processor and a modem processor. The application processor primarily handles operating systems, user interfaces, applications, and the like. The modem processor primarily handles wireless communications. It will be appreciated that the modem processor described above may also not be integrated into the processor 680.

The mobile phone also includes a power supply 690 (such as a battery) for supplying power to the various components. Preferably, the power supply may be logically connected to the processor 680 through a power management system, thereby implementing functions such as managing charging, discharging, and power consumption management through the power management system. Although not shown, the mobile phone may also include a camera, a Bluetooth module, etc., which will not be repeated here.

In the embodiments of the present disclosure, the RF circuit 610 is configured to receive an evaluation parameter of a low-speed mobility criterion sent by a network device.

The processor 680 is configured to evaluate a mobility state of a terminal device according to the evaluation parameter and a measurement result of a serving cell.

The RF circuit 610 is configured to report the mobility state of the terminal device to the network device for the network device to determine a cell measurement state.

Alternatively, the RF circuit 610 is further configured to receive a measurement instruction sent by the network device. The measurement instruction is configured to instruct the terminal device to perform a relax measure, and/or configured to instruct the terminal device to perform a normal measure.

Alternatively, the measurement instruction is determined according to the mobility state of the terminal device.

Alternatively, the mobility state of the terminal device includes low-speed mobility or non- low-speed mobility.

Alternatively, the evaluation parameter of the low-speed mobility criterion includes a first duration and a change threshold value of a reference signal received signal strength. The first duration is an evaluation duration of the reference signal received signal strength change.

The reference signal received signal strength is represented by following signals: Reference Signal Received Power (RSRP), and/or, Reference Signal received Quality (RSRQ).

Alternatively, the processer 680 is specifically configured to evaluate the mobility state of the terminal device according to the evaluation parameter, the measurement result of the serving cell, and a condition of the low-speed mobility criterion.

Alternatively, the condition of the low-speed mobility criterion includes an entry condition of the low-speed mobility criterion and/or a departure condition of the low-speed mobility criterion.

Alternatively, the entry condition of the low-speed mobility criterion includes:

$$(\text{Srxlev}_{\text{Ref}}-\text{Srxlev}) < S_{\text{searchDeltaP}}.$$

$\text{Srxlev}_{\text{Ref}}$ is a reference value of the reference signal received signal strength, Srxlev is a measurement value of the reference signal received signal strength of the serving cell, and $S_{\text{searchDeltaP}}$ is a change threshold value of the reference signal received signal strength.

Alternatively, the departure condition of the low-speed mobility criterion includes: $(\text{Srxlev}_{\text{Ref}}-\text{Srxlev}) >$

$S_{searchDeltaP}$.

$Srxlev_{Ref}$ is a reference value of the reference signal received signal strength, Srxlev is a measurement value of the reference signal received signal strength of the serving cell, and $S_{searchDeltaP}$ is a change threshold value of the reference signal received signal strength.

Alternatively, the evaluation parameter further includes a hysteresis parameter. The hysteresis parameter is a parameter for preventing ping-pong from entering and departing a low-speed mobility state

Alternatively, the entry condition of the low-speed mobility criterion includes:

$$(Srxlev_{Ref}\text{-}Srxlev + Hyst) < S_{searchDeltaP}$$

$Srxlev_{Ref}$ is a reference value of the reference signal received signal strength, Srxlev is a measurement value of the reference signal received signal strength of the serving cell, $S_{searchDeltaP}$ is a change threshold value of the reference signal received signal strength, and Hyst is the hysteresis parameter.

Alternatively, a departure condition of the low-speed mobility criterion includes: $(Srxlev_{Ref}\text{-}Srxlev\text{-}Hyst) > S_{searchDeltaP}$.

$Srxlev_{Ref}$ is a reference value of the reference signal received signal strength, Srxlev is a measurement value of the reference signal received signal strength of the serving cell, $S_{searchDeltaP}$ is a change threshold value of the reference signal received signal strength, and Hyst is the hysteresis parameter.

Alternatively, an initial value of the $Srxlev_{Ref}$ is a current measurement value of the reference signal received signal strength when the terminal device receives the evaluation parameter of the low-speed mobility criterion sent by the network device.

Alternatively, the processor 680 is further configured to update the $Srxlev_{Ref}$ to the current measurement value of the reference signal received signal strength when the entry condition of the low-speed mobility criterion is not satisfied.

Alternatively, the processor 680 is configured to update the $Srxlev_{Ref}$ to the current measurement value of the reference signal received signal strength when the departure condition of the low-speed mobility criterion is satisfied.

Alternatively, the processor 680 is specifically configured to determine that the mobility state of the terminal device is in low-speed mobility when the measurement result continuously satisfies an entry condition of the low-speed mobility criterion in a first duration.

Alternatively, the processing module 302 is specifically configured to determine that the mobility state of the terminal device is in non-low-speed mobility when the measurement result continuously satisfies a departure condition of the low-speed mobility criterion in the first duration.

Alternatively, the RF circuit 610 is further configured to report the measurement result of the serving cell to the network device.

Alternatively, the RF circuit 610 is specifically configured to report the measurement result of the serving cell to the network device according to an indication of the network device.

Alternatively, the measurement instruction is determined according to the mobility state of the terminal device and the measurement result of the serving cell.

Alternatively, the mobility state of the terminal device and the measurement result of the serving cell are reported through a same message.

Alternatively, the mobility state of the terminal device and the measurement result of the serving cell are reported through different messages.

Alternatively, the processor 680 is further configured to perform a cell measurement according to the measurement instruction.

Alternatively, the measurement instruction is for the serving cell of the terminal device, and/or, the measurement instruction is for a neighbor cell of the terminal device.

The embodiments of the present disclosure provide a computer-readable storage medium including computer instructions. When the computer instructions are executed by the computer, the computer executes various processes of the terminal device as mentioned in the method embodiments described above.

Embodiments, not covered by the current invention, provide a computer-readable storage medium including computer instructions. When the computer instructions are executed by the computer, the computer executes various processes of the network device as mentioned in the method embodiments described above.

Embodiments, not covered by the current invention, further provide a computer program product including computer instructions. When the computer program product is executed by a computer, the computer executes the computer instructions and the computer executes various processes of the terminal device as mentioned in the method embodiments described above.

Embodiments, not covered by the current invention, a computer program product including computer instructions. When the computer program product is executed by a computer, the computer executes the computer instructions and the computer executes various processes of the network device as mentioned in the method embodiments described above.

Embodiments, not covered by the current invention, a chip, which is coupled with the memory in the terminal device, so that the chip calls the program instructions stored in the memory when running, and the terminal device executes various processes of the terminal device as mentioned in the method embodiments described above.

Embodiments, not covered by the current invention, a chip, which is coupled with the memory in the network device, so that the chip calls the program instructions stored in the memory when running, and the network device executes various processes of the network device as mentioned in the method embodiments described above.

In the above embodiments, they may be implemented in whole or in part by software, hardware, firmware or any combination thereof. When implemented in software, they may be implemented in whole or in part in the form of a computer program product. A computer program product includes one or more computer instructions. When computer program instructions are loaded and executed on a computer, processes or functions according to embodiments of the present disclosure are generated in whole or in part. The computer may be a general purpose computer, a special purpose computer, a computer network, or other programmable device. The computer instructions may be stored in a computer-readable storage medium, or be transmitted from one computer-readable storage medium to another computer-readable storage medium. For example, computer instructions may be transmitted from one Web site, computer, server, or data center to another Web site, computer, server, or data center via wired (e.g. coaxial cable, optical fiber, digital subscriber line (DSL)) or wireless (e.g. infrared, wireless, microwave, etc.). The computer-readable storage medium may be any usable medium that a computer can store or a data storage device such as a server, data center, etc. that contains one or more usable medium integration. The usable medium may be magnetic media (e.g. floppy disk, hard disk, magnetic tape), optical media (e.g. DVD), or semiconductor media (e.g. Solid State Disk (SSD)), etc.

The terms "first", "second", "third", "fourth", etc. (if present) in the specification and claims of the present disclosure and the above drawings are used to distinguish similar objects and not be used to describe a particular order or priority. It should be understood that the data used in this way can be interchanged where appropriate so that the embodiments described herein can be implemented in an order other than that illustrated or described herein. In addition, the terms "comprising" and "having" and any variations of them, they are intended to cover non-exclusive inclusion, for example, the processes, methods, systems, products, or devices that include a series of steps or units need not be limited to those clearly listed, but may include other steps or units that are not clearly listed or inherent to such processes, methods, products, or devices.

## Claims

1. A method for indicating cell measurement, performed by a terminal device, comprising:

   receiving (201) an evaluation parameter of a low-speed mobility criterion sent by a network device, **characterized in that** the evaluation parameter of the low-speed mobility criterion comprises: a first duration and a change threshold value of a reference signal received signal strength, wherein the first duration is an evaluation duration of the reference signal received signal strength change;
   evaluating a mobility state of a terminal device according to the evaluation parameter, a measurement result of a serving cell and a condition of the low-speed mobility criterion; and
   reporting (203) the mobility state of the terminal device to the network device, wherein the mobility state of the terminal device is used for the network device to determine a cell measurement state,
   wherein evaluating the mobility state of the terminal device according to the evaluation parameter, the measurement result and the condition of the low-speed mobility criterion comprises:

   in response to the measurement result continuously satisfying an entry condition of the low-speed mobility criterion in the first duration, determining that the mobility state of the terminal device is in low-speed mobility; or,
   in response to the measurement result continuously satisfying a departure condition of the low-speed mobility criterion in the first duration, determining that the mobility state of the terminal device is in non-low-speed mobility.

2. The method of claim 1, wherein the reference signal received signal strength is represented by following signals: Reference Signal Received Power, RSRP, and/or, Reference Signal received Quality, RSRQ.

3. The method of claim 1, wherein the condition of the low-speed mobility criterion comprises:

an entry condition of the low-speed mobility criterion; and/or,
a departure condition of the low-speed mobility criterion.

4. The method of claim 3, wherein the entry condition of the low-speed mobility criterion comprises:

$$(\text{Srxlev}_{\text{Ref}}\text{-Srxlev}) < S_{\text{searchDeltaP}};$$

wherein $\text{Srxlev}_{\text{Ref}}$ is a reference value of the reference signal received signal strength, Srxlev is a measurement value of the reference signal received signal strength of the serving cell, and $S_{\text{searchDeltaP}}$ is a change threshold value of the reference signal received signal strength.

5. The method of claim 4, wherein an initial value of the $\text{Srxlev}_{\text{Ref}}$ is a current measurement value of the reference signal received signal strength when the terminal device receives the evaluation parameter of the low-speed mobility criterion sent by the network device.

6. The method of claim 5, further comprising:

updating the $\text{Srxlev}_{\text{Ref}}$ to the current measurement value of the reference signal received signal strength when the entry condition of the low-speed mobility criterion is not satisfied; or,
updating the $\text{Srxlev}_{\text{Ref}}$ to the current measurement value of the reference signal received signal strength when the departure condition of the low-speed mobility criterion is satisfied.

7. A method for indicating cell measurement, performed by a network device, comprising:

sending (201) an evaluation parameter of a low-speed mobility criterion to a terminal device, **characterized in that** the evaluation parameter of the low-speed mobility criterion comprises: a first duration and a change threshold value of a reference signal received signal strength, wherein the first duration is an evaluation duration of the reference signal received signal strength change; and
receiving a mobility state of the terminal device reported by the terminal device to determine a cell measurement state, wherein the mobility state of the terminal device is configured to be evaluated and obtained by the terminal device according to the evaluation parameter, a measurement result of a serving cell and a condition of the low-speed mobility criterion, wherein the mobility state of the terminal device is in low-speed mobility in response to the measurement result continuously satisfying an entry condition of the low-speed mobility criterion in the first duration, or, the mobility state of the terminal device is in non-low-speed mobility in response to the measurement result continuously satisfying a departure condition of the low-speed mobility criterion in the first duration.

8. The method of claim 7, wherein the reference signal received signal strength is represented by following signals: Reference Signal Received Power, RSRP, and/or, Reference Signal received Quality, RSRQ.

9. A terminal device comprising:
a processor, a memory, and a computer program stored on the memory and executable by the processor, wherein when the computer program is executed by the processor, a method for indicating cell measurement of any one of claims 1 to 6 is implemented.

10. A network device comprising:
a processor, a memory, and a computer program stored on the memory and executable by the processor, wherein when the computer program is executed by the processor, a method for indicating cell measurement of any one of claims 7 to 8 is implemented.

**Patentansprüche**

1. Verfahren zum Anzeigen einer Zellenmessung, die durch ein Endgerät durchgeführt wird, das Folgendes umfasst:

Empfangen (201) eines Bewertungsparameters eines Niedergeschwindigkeitsmobilitätskriteriums, der durch eine Netzvorrichtung gesendet wurde, **dadurch gekennzeichnet, dass** der Bewertungsparameter des Niedergeschwindigkeitsmobilitätskriteriums Folgendes umfasst: eine erste Dauer und einen Änderungsschwellenwert einer Bezugssignal-Empfangssignalstärke, wobei die erste Dauer eine Bewertungsdauer der Bezugssignal-Empfangssignalstärkeänderung ist;

Bewerten eines Mobilitätszustands eines Endgeräts gemäß dem Bewertungsparameter, einem Messergebnis einer dienenden Zelle und einer Bedingung des Niedergeschwindigkeitsmobilitätskriteriums und

Berichten (203) des Mobilitätszustands des Endgeräts zur Netzvorrichtung, wobei der Mobilitätszustand des Endgeräts zum Bestimmen eines Zellenmessungszustands durch die Netzvorrichtung verwendet wird,

wobei das Bewerten des Mobilitätszustands des Endgeräts gemäß dem Bewertungsparameter, dem Messergebnis und der Bedingung des Niedergeschwindigkeitsmobilitätskriteriums Folgendes umfasst:

Bestimmen in Reaktion darauf, dass das Messergebnis eine Eintrittsbedingung des Niedergeschwindigkeitsmobilitätskriteriums in der ersten Dauer kontinuierlich erfüllt, dass der Mobilitätszustand des Endgeräts Niedergeschwindigkeitsmobilität ist; oder

Bestimmen in Reaktion darauf, dass das Messergebnis eine Abweichungsbedingung des Niedergeschwindigkeitsmobilitätskriteriums in der ersten Dauer kontinuierlich erfüllt, dass der Mobilitätszustand des Endgeräts Nicht-Niedergeschwindigkeitsmobilität ist.

2. Verfahren nach Anspruch 1, wobei die Bezugssignal-Empfangssignalstärke durch folgende Signale repräsentiert wird:

Bezugssignalempfangsleistung, RSRP, und/oder Bezugssignalempfangsqualität, RSRQ.

3. Verfahren nach Anspruch 1, wobei die Bedingung des Niedergeschwindigkeitsmobilitätskriteriums Folgendes umfasst:

eine Eintrittsbedingung des Niedergeschwindigkeitsmobilitätskriteriums und/oder
eine Abweichungsbedingung des Niedergeschwindigkeitsmobilitätskriteriums.

4. Verfahren nach Anspruch 3, wobei die Eintrittsbedingung des Niedergeschwindigkeitsmobilitätskriteriums Folgendes umfasst:

$$(\mathrm{Srxlev}_{Ref} - \mathrm{Srxlev}) < S_{searchDeltaP};$$

wobei $\mathrm{Srxlev}_{Ref}$ ein Bezugswert der Bezugssignal-Empfangssignalstärke ist, $\mathrm{Srxlev}$ ein Messwert der Bezugssignal-Empfangssignalstärke der dienenden Zelle ist und $S_{searchDeltaP}$ ein Änderungsschwellenwert der Bezugssignal-Empfangssignalstärke ist.

5. Verfahren nach Anspruch 4, wobei ein Anfangswert der $\mathrm{Srxlev}_{Ref}$ ein aktueller Messwert der Bezugssignal-Empfangssignalstärke ist, wenn das Endgerät den Bewertungsparameter des Niedergeschwindigkeitsmobilitätskriteriums empfängt, der durch die Netzvorrichtung gesendet wurde.

6. Verfahren nach Anspruch 5, das ferner Folgendes umfasst:

Aktualisieren der $\mathrm{Srxlev}_{Ref}$ zum aktuellen Messwert der Bezugssignal-Empfangssignalstärke, wenn die Eintrittsbedingung des Niedergeschwindigkeitsmobilitätskriteriums nicht erfüllt ist; oder
Aktualisieren der $\mathrm{Srxlev}_{Ref}$ zum aktuellen Messwert der Bezugssignal-Empfangssignalstärke, wenn die Abweichungsbedingung des Niedergeschwindigkeitsmobilitätskriteriums erfüllt ist.

7. Verfahren zum Anzeigen einer Zellenmessung, die durch eine Netzvorrichtung durchgeführt wird, das Folgendes umfasst:

Senden (201) eines Bewertungsparameters eines Niedergeschwindigkeitsmobilitätskriteriums zu einem Endgerät, **dadurch gekennzeichnet, dass** der Bewertungsparameter des Niedergeschwindigkeitsmobilitätskriteriums Folgendes umfasst: eine erste Dauer und einen Änderungsschwellenwert einer Bezugssignal-Empfangssignalstärke, wobei die erste Dauer eine Bewertungsdauer der Bezugssignal-Empfangssignalstärkeänderung ist; und
Empfangen eines Mobilitätszustands des Endgeräts, der durch das Endgerät berichtet wird, um einen Zellenmessungszustand zu bestimmen, wobei der Mobilitätszustand des Endgeräts konfiguriert ist, durch das Endgerät gemäß dem Bewertungsparameter, einem Messergebnis einer dienenden Zelle und einer Bedingung des Niedergeschwindigkeitsmobilitätskriteriums bewertet und erhalten zu werden, wobei der Mobilitätszustand des Endgeräts in Reaktion darauf, dass das Messergebnis eine Eintrittbedingung des Niedergeschwindigkeitsmobilitätskriteriums in der ersten Dauer kontinuierlich erfüllt, Niedergeschwindigkeitsmobilität ist oder der Mobilitätszustand des Endgeräts in Reaktion darauf, dass das Messergebnis eine Abweichungsbedingung des Niedergeschwindigkeitsmobilitätskriteriums in der ersten Dauer kontinuierlich erfüllt, Nicht-Niedergeschwindigkeitsmobilität ist.

8.  Verfahren nach Anspruch 7, wobei die Bezugssignal-Empfangssignalstärke durch folgende Signale repräsentiert wird:
Bezugssignalempfangsleistung, RSRP, und/oder Bezugssignalempfangsqualität, RSRQ.

9.  Endgerät, das Folgendes umfasst:
einen Prozessor, einen Speicher und ein Computerprogramm, das im Speicher gespeichert ist und durch den Prozessor ausführbar ist, wobei dann, wenn das Computerprogramm durch den Prozessor ausgeführt wird, ein Verfahren zum Anzeigen einer Zellenmessung nach einem der Ansprüche 1 bis 6 implementiert ist.

10. Netzvorrichtung, die Folgendes umfasst:
einen Prozessor, einen Speicher und ein Computerprogramm, das im Speicher gespeichert ist und durch den Prozessor ausführbar ist, wobei dann, wenn das Computerprogramm durch den Prozessor ausgeführt wird, ein Verfahren zum Anzeigen einer Zellenmessung nach einem der Ansprüche 7 bis 8 implementiert ist.

**Revendications**

1.  Procédé d'indication de mesure de cellule, exécuté par un dispositif terminal, comprenant :

la réception (201) d'un paramètre d'évaluation d'un critère de mobilité à faible vitesse envoyé par un dispositif de réseau, **caractérisé en ce que** le paramètre d'évaluation du critère de mobilité à faible vitesse comprend :
une première durée et une valeur seuil de changement d'une intensité de signal de référence reçue, la première durée étant une durée d'évaluation du changement d'intensité de signal de référence reçue ;
l'évaluation d'un état de mobilité d'un dispositif terminal d'après le paramètre d'évaluation, un résultat de mesure d'une cellule de desserte et une condition du critère de mobilité à faible vitesse ; et
la notification (203) de l'état de mobilité du dispositif terminal au dispositif de réseau, l'état de mobilité du dispositif terminal étant utilisé pour que le dispositif de réseau détermine un état de mesure de cellule,
l'évaluation de l'état de mobilité du dispositif terminal d'après le paramètre d'évaluation, du résultat de mesure et de la condition du critère de mobilité à faible vitesse comprenant :

en réponse au fait que le résultat de mesure satisfait en continu à une condition d'entrée du critère de mobilité à faible vitesse sur la première durée, la détermination du fait que l'état de mobilité du dispositif terminal est une mobilité à faible vitesse ; ou,
en réponse au fait que le résultat de mesure satisfait en continu à une condition de sortie du critère de mobilité à faible vitesse sur la première durée, la détermination du fait que l'état de mobilité du dispositif terminal est une mobilité non à faible vitesse.

2.  Procédé selon la revendication 1, dans lequel l'intensité de signal de référence reçue est représentée par les signaux suivants :
Puissance de Signal de Référence Reçue, RSRP, et/ou, Qualité de Signal de Référence Reçue, RSRQ.

3.  Procédé selon la revendication 1, dans lequel la condition du critère de mobilité à faible vitesse comprend :
une condition d'entrée du critère de mobilité à faible vitesse ; et/ou une condition de sortie du critère de mobilité à faible vitesse.

4.  Procédé selon la revendication 3, dans lequel la condition d'entrée du critère de mobilité à faible vitesse comprend :

$$(Srxlev_{Ref} - Srxlev) < S_{searchDeltaP} \ ;$$

où $Srxlev_{Ref}$ est une valeur de référence de l'intensité de signal de référence reçue, Srxlev est une valeur de mesure de l'intensité de signal de référence reçue de la cellule de desserte, et $S_{searchDeltaP}$ est une valeur seuil de changement de l'intensité de signal de référence reçue.

5. Procédé selon la revendication 4, dans lequel une valeur initiale de $Srxlev_{Ref}$ est une valeur de mesure courante de l'intensité de signal de référence reçue lorsque le dispositif terminal reçoit le paramètre d'évaluation du critère de mobilité à faible vitesse envoyé par le dispositif de réseau.

6. Procédé selon la revendication 5, comprenant en outre :

la mise à jour de $Srxlev_{Ref}$ à la valeur de mesure courante de l'intensité de signal de référence reçue lorsque la condition d'entrée du critère de mobilité à faible vitesse n'est pas satisfaite ; ou,
la mise à jour de $Srxlev_{Ref}$ à la valeur de mesure courante de l'intensité de signal de référence reçue lorsque la condition de sortie du critère de mobilité à faible vitesse est satisfaite.

7. Procédé d'indication de mesure de cellule, exécuté par un dispositif de réseau, comprenant :

l'envoi (201) d'un paramètre d'évaluation d'un critère de mobilité à faible vitesse à un dispositif terminal, **caractérisé en ce que** le paramètre d'évaluation du critère de mobilité à faible vitesse comprend : une première durée et une valeur seuil de changement d'une intensité de signal de référence reçue, la première durée étant une durée d'évaluation du changement d'intensité de signal de référence reçue ; et
la réception d'un état de mobilité du dispositif terminal notifié par le dispositif terminal pour déterminer un état de mesure de cellule, l'état de mobilité du dispositif terminal étant configuré pour être évalué et obtenu par le dispositif terminal d'après le paramètre d'évaluation, un résultat de mesure d'une cellule de desserte et une condition du critère de mobilité à faible vitesse, l'état de mobilité du dispositif terminal étant une mobilité à faible vitesse en réponse au fait que le résultat de mesure satisfait en continu à une condition d'entrée du critère de mobilité à faible vitesse sur la première durée, ou l'état de mobilité du dispositif terminal étant une mobilité non à faible vitesse en réponse au fait que le résultat de mesure satisfait en continu à une condition de sortie du critère de mobilité à faible vitesse sur la première durée.

8. Procédé selon la revendication 7, dans lequel l'intensité de signal de référence reçue est représentée par les signaux suivants :
Puissance de Signal de Référence Reçue, RSRP, et/ou, Qualité de Signal de Référence Reçue, RSRQ.

9. Dispositif terminal comprenant :
un processeur, une mémoire, et un programme informatique stocké sur la mémoire et exécutable par le processeur, dans lequel, lorsque le programme informatique est exécuté par le processeur, un procédé d'indication de mesure de cellule selon l'une quelconque des revendications 1 à 6 est mis en oeuvre.

10. Dispositif de réseau comprenant :
un processeur, une mémoire, et un programme informatique stocké sur la mémoire et exécutable par le processeur, dans lequel, lorsque le programme informatique est exécuté par le processeur, un procédé d'indication de mesure de cellule selon l'une quelconque des revendications 7 à 8 est mis en oeuvre.

**FIG. 1**

FIG. 2

Terminal device

Receiving
module 301

Processing
module 302

Sending module
303

**FIG. 3**

Network device

Sending module
401

Receiving module
402

**FIG. 4**

Base station

Transmitter 501

Receiver 502

**FIG. 5**

610 — RF circuit

690

680

620

Power source

Memory

WiFi module — 670

660

Audio circuit

Speaker 661

Microphone 662

Processor

Sensor — 650

Input unit — 631
Touch panel

630

Other input device

Display unit — 640
Display panel

632

641

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015172907 A1

- EP 2426980 A1

**Non-patent literature cited in the description**

- **ERICSSON.** Relaxed monitoring criterion in Idle and Inactive mode. *3GPP DRAFT· R2-1909986*

- **OPPO.** UE power Consumption Reduction in RRM Measurements. *3GPP Draft; R1-1903351*